# EUROPEAN PATENT APPLICATION

(11) **EP 4 711 427 A1**
(43) Date of publication of application: **18.03.2026**
(21) Application number: 25200263.9
(22) Date of filing: 04.09.2025
(51) Int. Cl.: C09D 11/38, C09D 11/322

(54) **INK**

(30) Priority: 17.09.2024 JP 2024160094
(71) Applicant: KYOCERA Document Solutions Inc., Osaka-shi, Osaka 540-8585 (JP)
(72) Inventor: SANDA, Ai, Osaka-shi, Osaka 540-8585 (JP)
(74) Representative: Viering, Jentschura & Partner mbB Patent- und Rechtsanwälte

(57) **Abstract**

An ink includes: a surfactant represented by the following general formula (1); a water-soluble solvent having a log Kow of -1.0 or more and 0.4 or less; a pigment; and water, a content of the water-soluble solvent being 30 mass% or more and 50 mass% or less. 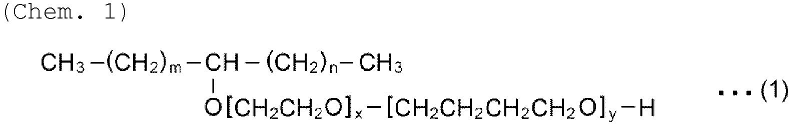 (In the general formula (1), m and n indicate integers whose sum is 12 or more and 14 or less, x indicates an integer of 1 or more and 20 or less, and y indicates an integer of 1 or more and 10 or less.)

## Description

### Field

The present disclosure relates to an ink for inkjet printing.

### Background

As inks used for inkjet printing, those capable of printing with high image density and a wide line width are suitable. High image density can be achieved by using a solvent formulation including many highly hydrophobic solvents and agglomerating pigments on the paper surface. However, when using a highly hydrophobic solvent formulation, surface tension cannot be reduced using a surfactant, resulting in poorer wetting spread of the ink. Therefore, high image density and a wide line width are in a trade-off relationship, and it is difficult to achieve both simultaneously.

Meanwhile, Japanese Patent Application Laid-open No. 2006-225603 discloses a technology that uses an ink in which a colorant and a predetermined compound are added to achieve excellent color density on both plain paper and special paper, further excellent ejection stability in inkjet recording, and a sufficient line width in printing.

### Summary

According to an embodiment of the present disclosure, there is provided an ink, including: a surfactant represented by the following general formula (1); a water-soluble solvent having a log Kow of -1.0 or more and 0.4 or less; a pigment; and water, a content of the water-soluble solvent being 30 mass% or more and 50 mass% or less. 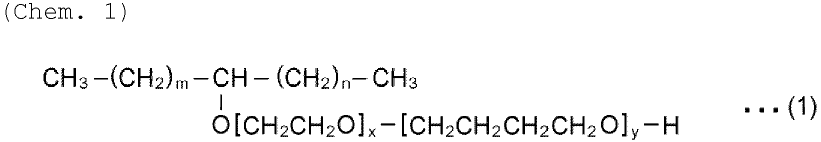 (In the general formula (1), m and n indicate integers whose sum is 12 or more and 14 or less, x indicates an integer of 1 or more and 20 or less, and y indicates an integer of 1 or more and 10 or less.)

### Detailed Description

An embodiment of the present disclosure will be described.

### [Configuration of ink]

### (Schematic configuration)

An ink according to an embodiment of the present disclosure includes a surfactant a, a water-soluble solvent b, a pigment c, and water. The ink according to this embodiment is typically a water-based ink that is ejected onto a recording medium from a recording head of an inkjet recording apparatus to record an image on the recording medium. Examples of the recording medium on which an image is recorded by the ink according to this embodiment include plain paper, copy paper, recycled paper, thin paper, thick paper, glossy paper, and OHP.

In the ink according to this embodiment, by using the surfactant a having specific configuration, it is possible to reduce the dynamic surface tension of the ink even with a highly hydrophobic solvent formulation, and maintain high image density while ensuring wetting spread of the ink. Details of each component of the ink according to this embodiment will be described below.

### (Surfactant a)

The surfactant a is a nonionic surfactant that is represented by the following general formula (1) and has an ethyleneoxide chain, a butylene oxide chain positioned at one end of the ethyleneoxide chain, and a hydrocarbon chain positioned at the other end of the ethyleneoxide chain. Since the surfactant a has a butylene oxide chain having high hydrophobicity, the dynamic surface tension of the ink is reduced even with a highly hydrophobic solvent formulation, and the wetting spread of the ink can be made large. Further, since pigments are agglomerated in the highly hydrophobic solvent formulation, high image density can be maintained. 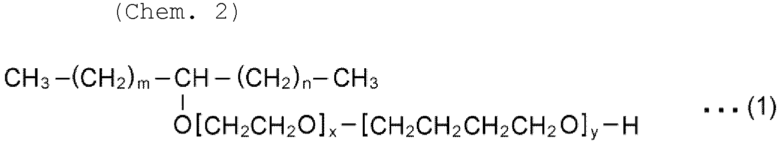 (in the general formula (1), m and n indicate integers whose sum is 12 or more and 14 or less, x indicates an integer of 1 or more and 20 or less, and y indicates an integer of 1 or more and 10 or less.)

In the general formula (1), in the case where m + n is 11 or less, x is 21 or more, or y is 0, the hydrophilicity of the surfactant a is too high and the dynamic surface tension of the ink increases, resulting in a smaller line width. Further, in the case where m + n is 15 or more, x is 0, or y is 11 or more, the hydrophobicity of the surfactant a is too high and the dynamic surface tension of the ink decreases, resulting in lower image density. Therefore, in the ink according to this embodiment, it is suitable to set m + n to 12 or more and 14 or less, x to 1 or more and 20 or less, and y to 1 or more and 10 or less (see Examples).

In the ink according to this embodiment, the content of the surfactant a is favorably 0.1 mass% or more in order to sufficiently achieve the effect of the surfactant a. Further, in the ink according to this embodiment, the content of the surfactant a is favorably 1.0 mass% or less.

### (Water-soluble solvent b)

The water-soluble solvent b has an octanol/water partition coefficient (log Kow) of -1.0 or more and 0.4 or less. This causes the pigment c to be agglomerated on a recording medium by hydrophobic interactions. As a result, in the ink according to this embodiment, high image density on the recording medium is achieved. That is, it is possible to record a clear image with high visibility on the recording medium.

When the octanol/water partition coefficient (log Kow) of the water-soluble solvent b is less than - 1.0, the hydrophilicity of the water-soluble solvent b is too high and the dynamic surface tension of the ink increases, making it difficult for the ink to wet and spread and reducing the line width. Meanwhile, when the octanol/water partition coefficient (log Kow) of the water-soluble solvent b exceeds 0.4, the hydrophobicity of the water-soluble solvent b is too high and the dynamic surface tension of the ink decreases, making it difficult for the pigment c to be agglomerated and making image density lower. Therefore, the octanol/water partition coefficient (log Kow) of the water-soluble solvent b is suitably -1.0 or more and 0.4 or less.

Specifically, as the water-soluble solvent b, one or more of propylene glycol, 2-pyrrolidone, 1,5-pentanediol, and 3-methyl-1,5-pentanediol can be used. The octanol/water partition coefficient (log Kow) of each of these substances is shown in the following Table 1. Note that the values in Table 1 are quoted from the software "HSPiP".

**(Table 1)**

| Name | log Kow |
|---|---|
| Propylene glycol | -0.92 |
| 2-pyrrolidone | -0.85 |
| 1,5-pentanediol | -0.19 |
| 3-methyl-1,5-pentanediol | 0.35 |

In the ink according to this embodiment, the content of the water-soluble solvent b is suitably 30 mass% or more and 50 mass% or less in order to achieve the above effect of the water-soluble solvent b.

### (Pigment c)

The ink according to this embodiment includes the pigment c as a coloring agent from the viewpoints of color mixing prevention and improvement in water resistance in the image recorded on the recording medium. The pigment c may be either an inorganic pigment or an organic pigment. Further, as the pigment c, these may be combined with an extender pigment as necessary.

Specific examples of the inorganic pigment that can be used in the ink according to this embodiment include carbon black and a metal oxide. In particular, in the case of a black ink, carbon black is favorable. Examples of the carbon black include furnace black, thermal lamp black, acetylene black, and channel black.

Specific examples of the organic pigment that can be used in the ink according to this embodiment include an azo pigment, a diazo pigment, a phthalocyanine pigment, a quinacridone pigment, an isoindolinone pigment, a dioxazine pigment, a perylene pigment, a perinone pigment, a thioindigo pigment, an anthraquinone pigment, and a quinophthalone pigment.

In the ink according to this embodiment, the hue is not particularly limited, and a colored pigment of any of colors such as yellow, magenta, cyan, blue, red, orange, and green can be used. Specific examples of the favorable colored pigment include C.I. (Color Index International) Pigment Yellow, C.I. Pigment Red, C.I. Pigment Orange, C.I. Pigment Violet, C.I. Pigment Blue, and C.I. Pigment Green. In the ink according to this embodiment, one or more selected from these colored pigments can be used as the pigment c.

### (Water)

In the ink according to this embodiment, ion exchanged water, purified water, distilled water, or the like can be used as water. In the ink according to this embodiment, the content of water is favorably 40 mass% or more and 70 mass% or less from the viewpoints of dryness and ejection reliability.

### (Other components)

In the ink according to this embodiment, components other than the above may be blended as necessary. For example, in the ink according to this embodiment, a dispersant having the effect of enhancing the dispersibility of the pigment c in the solvent can be blended. As the dispersant, a pigment dispersion resin, a surfactant, or the like can be used.

The pigment dispersion resin is resin fine particles and is adsorbed on the surface of the pigment c to enhance the dispersibility of the pigment c in the solvent. The molecular weight of the pigment dispersion resin is favorably approximately several ten thousand. Specifically, as the material satisfying the above conditions, a styrene acrylic resin can be used and a resin having an acid value in a range of 150 mg KOH/g or more and 300 mg KOH/g or less is suitable. When the acid value is low, the pigment dispersibility is poor, the micronization is made difficult, and the color development and coloration power are reduced. Further, when the acid value is high, the preservation stability of the ink deteriorates.

The surfactant to be blended as a dispersant is blended separately from the surfactant a and enhances the dispersibility of the pigment c in the solvent by reducing the interfacial tension between the pigment c and the solvent. As such a surfactant, for example, a nonionic surfactant or an anionic surfactant can be used.

Further, in the ink according to this embodiment, various additives such as a dissolution stabilizer, an anti-drying agent, an antioxidant, a viscosity adjustor, a pH adjuster, a neutralizer, and an antifungal agent may be blended as necessary in addition to the dispersant.

The ink according to this embodiment has the configuration as described above. The ink according to this embodiment is configured such that the dynamic surface tension of the ink is within a suitable range, specifically, the dynamic surface tension at 10 msec is 37 mN/m or more and 39 mN/m or less, by setting m + n to 12 or more and 14 or less, x to 1 or more and 20 or less, and y to 1 or more and 10 or less in the general formula (1) of the surfactant a and setting the octanol/water partition coefficient (log Kow) of the water-soluble solvent b to -1.0 or more and 0.4 or less, as described above. As a result, the ink according to this embodiment is capable of achieving both high image density and a wide line width simultaneously (see Examples).

### (Examples)

Inks were prepared and evaluated as Examples and Comparative Examples of the present disclosure.

### (Preparation of inks)

First, a pigment dispersion liquid was prepared. The pigment dispersion liquid was prepared by blending the pigment c, a pigment dispersion resin, sodium hydroxide, OLFINE (registered trademark) E1010, and water such that the content shown in Table 2 was achieved.

**(Table 2)**

| Component | Content [mass%] |
|---|---|
| Pigment c | 15 |
| Pigment dispersion resin | 6.0 |
| Sodium hydroxide | 0∼ 1.0 |
| OLFINE E1010 | 0.5 |
| Water | 80 |
| Total | 100.0 |

As the pigment c, PR-112 was used. As the pigment dispersion resin, a styrene-acrylic resin that has a molecular weight of 20,000 and an acid value of 100 mg KOH/g was used. Sodium hydroxide was blended as a neutralizer for neutralizing the pigment dispersion resin, and the amount was set to neutralize the pigment dispersion resin at 105% equivalent. OLFINE (registered trademark) E1010 is the surfactant to be blended as a dispersant and is a nonionic surfactant manufactured by Nissin Chemical Co., Ltd. As water, ion exchanged water was used.

The pigment dispersion liquid was prepared by mixing the above components by wet dispersion using a media-type wet disperser. Examples of the media-type wet disperser include a wet disperser (more specifically, "Nano Grain Mill" manufactured by ASADA IRON WORKS.CO., LTD., "MSC mill" manufactured by NIPPON COKE & ENGINEERING. CO., LTD., "DYNO (registered trademark)-MILL" manufactured by Shinmaru Enterprises Corporation, and the like).

In the wet dispersion using a media-type wet disperser, media (zirconia beads having a diameter of 0.5 mm) were set in a vessel and the ejection rate was controlled at 200 to 600 g/min to adjust the average particle diameter of the pigment dispersion including the dispersant adhered to the pigment c dispersed in water to 70 to 130 nm. The grain size distribution of the pigment dispersion was measured using "Zetasizer Nano" manufactured by Sysmex Corporation with a diluted solution of the pigment dispersion liquid diluted 300 times with ion exchanged water.

Next, inks according to Examples and Comparative Examples were prepared. The inks according to Examples and Comparative Examples were prepared by blending the above pigment dispersion liquid, the surfactant a, the water-soluble solvent b, and water such that the content shown in Table 3 was achieved.

**(Table 3)**

| Component | Content [mass%] |
|---|---|
| Pigment dispersion liquid | 8 |
| Surfactant a | 0.5 |
| Water-soluble solvent b | 30 |
| Water | Remainder |
| Total | 100.0 |

The surfactant a and the water-soluble solvent b used in Examples and Comparative Examples are shown in Table 4 and Table 5. Note that m, n, x, and y in Table 4 and Table 5 respectively indicate m, n, x, and y in the above general formula (1). Further, Table 4 and Table 5 also show the log Kow quoted from the calculation software "HSPiP" for the water-soluble solvent b. As water, ion exchanged water was used.

**(Table 4)**

| | | Surfactant a | | | | | Water-soluble solvent b | |
|---|---|---|---|---|---|---|---|---|
| | | m | n | m+n | x | y | Name | log Kow |
| Example | 1 | 6 | 6 | 12 | 10 | 5 | Propylene glycol | -0.92 |
| | 2 | 6 | 6 | 12 | 10 | 5 | 3-methyl-1,5-pentanediol | 0.35 |
| | 3 | 6 | 6 | 12 | 15 | 3 | Propylene glycol | -0.92 |
| | 4 | 6 | 6 | 12 | 15 | 3 | 3-methyl-1,5-pentanediol | 0.35 |
| Comparative Example | 1 | 6 | 6 | 12 | 10 | 5 | 1,3-propanediol | -1.04 |
| | 2 | 6 | 6 | 12 | 10 | 5 | Triethylene glycol monobutyl ether | 0.44 |
| | 3 | 6 | 6 | 12 | 15 | 3 | 1,3-propanediol | -1.04 |
| | 4 | 6 | 6 | 12 | 15 | 3 | Triethylene glycol monobutyl ether | 0.44 |
| Example | 5 | 1 | 11 | 12 | 10 | 5 | Propylene glycol | -0.92 |
| | 6 | 11 | 1 | 12 | 10 | 5 | Propylene glycol | -0.92 |
| | 7 | 7 | 7 | 14 | 10 | 5 | Propylene glycol | -0.92 |
| | 8 | 5 | 9 | 14 | 10 | 5 | Propylene glycol | -0.92 |

**[Table 5]**

| | | Surfactant a | | | | | Water-soluble solvent b | |
|---|---|---|---|---|---|---|---|---|
| | | m | n | m+n | x | y | Name | log Kow |
| Comparative Example | 5 | 5 | 6 | 11 | 10 | 5 | Propylene glycol | -0.92 |
| | 6 | 5 | 10 | 15 | 10 | 5 | Propylene glycol | -0.92 |
| Example | 9 | 6 | 6 | 12 | 5 | 5 | Propylene glycol | -0.92 |
| | 10 | 6 | 6 | 12 | 1 | 10 | Propylene glycol | -0.92 |
| | 11 | 6 | 6 | 12 | 20 | 5 | Propylene glycol | -0.92 |
| | 12 | 6 | 6 | 12 | 10 | 1 | Propylene glycol | -0.92 |
| Comparative Example | 7 | 6 | 6 | 12 | 0 | 5 | Propylene glycol | -0.92 |
| | 8 | 6 | 6 | 12 | 21 | 5 | Propylene glycol | -0.92 |
| | 9 | 6 | 6 | 12 | 10 | 0 | Propylene glycol | -0.92 |
| | 10 | 6 | 6 | 12 | 10 | 11 | Propylene glycol | -0.92 |

For the preparation of each ink, the components shown in Table 3 were added in order while stirring the solvent using a stirrer. Further, tyhe ink after stirring was filtered using a filter having a pore size of φ5 µm to remove foreign substances, dirt, coarse particles, and the like.

### (Evaluation of ink)

For the inks according to Examples and Comparative Examples, the image density and preservation stability were evaluated.

### <Measurement of dynamic surface tension>

The dynamic surface tension at 10 to 1000 msec of the ink was measured using a bubble pressure method (KRUSS GmbH: bubble pressure dynamic surface tensiometer BP100), and a capillary having a diameter of 0.4 mm was used. The bubble pressure method is a method of inserting a capillary having a known diameter into a liquid, introducing a gas into the capillary, and calculating surface tension on the basis of the pressure of the bubble formed at the tip, and is most widely used as a method of measuring dynamic surface tension. By changing the amount of gas to be injected, the rate at which an interface forms is changed, and the change in surface tension for each rate of interface formation is measured. The time from the onset of interface formation to the point where pressure reaches its maximum is referred to as the "Surface Age", and is used as a time parameter for evaluating dynamic surface tension. For the inks according to Examples and Comparative Examples, the value of dynamic surface tension at 10 msec measured using the bubble pressure method was evaluated. All of the dynamic surface tension described below are values at 10 msec.

### <Evaluation device>

The image density, rubfastness, and intermittent ejection maintaining property were evaluated in an environment of a temperature of 32°C and a relative humidity of 50% RH. For the three evaluations, an inkjet recording apparatus (inkjet recording apparatus including a line type recording head, a tester manufactured by KYOCERA Document Solutions Inc.) was used as an evaluation device. The ink tank for black of the evaluation device was filled with each of the inks according to Examples and Comparative Examples. For the evaluation of image density, rubfastness, and intermittent ejection maintaining property, copy paper("CC90" manufactured by Mondi plc) was used as a recording medium.

### <Evaluation of image density>

Using the above evaluation device, the amount of ink to be ejected from one recording head is set to 11.5 pL, and a solid image of 2.3 cm × 11.5 cm was printed on copy paper ("CC90" manufactured by Mondi plc) as a recording medium. The plain paper on which the image was formed was preserved in a normal temperature and normal humidity environment for a day and a night, the image density of the solid image was measured using a spectrodensitometer (FD-5: manufactured by Konica Minolta, Inc.), and the average value of image densities at three positions in the solid image was used as the print density. The measurement conditions were the observation light source D50, the illumination condition M2, the field of view of 2°, and the density status I. The image density of 1.18 or more was determined as good (A) and the image density of less than 1.18 was determined as poor (B).

### <Evaluation of wetting spread>

The wetting spread was evaluated on the basis of the line width of the printed matter. The measured line width is an index of whether or not each sheet of paper is solid filled. Copy paper ("CC90" manufactured by Mondi plc) was used as a recording medium. The ejection rate of the above evaluation device was adjusted to 8 m/s, and one dot line (one line formed by one dot) was printed at a head temperature of 32°C and a humidity of 15%. The one dot line was observed under a microscope and the line width was measured. The line width of 75 µm or more was determined as good (A) and the line width of less than 75 µm was determined as poor (B).

### <Evaluation result>

For the inks according to Examples and Comparative Examples, the evaluation results of the image density and wetting spread are shown in Table 6 and Table 7.

**(Table 6)**

| | | Dynamic surface tension [mN/m] | Image density | | Determination [µm] | |
|---|---|---|---|---|---|---|
| | | Measured value (10msec) | Measured value | Determination | Measured value | Determination |
| Example | 1 | 38 | 1.28 | A | 77 | A |
| | 2 | 37 | 1.20 | A | 82 | A |
| | 3 | 39 | 1.31 | A | 75 | A |
| | 4 | 37 | 1.24 | A | 85 | A |
| Comparative Example | 1 | 44 | 1.52 | A | 70 | B |
| | 2 | 34 | 1.15 | B | 85 | A |
| | 3 | 45 | 1.55 | A | 68 | B |
| | 4 | 36 | 1.17 | B | 86 | A |
| Example | 5 | 38 | 1.27 | A | 77 | A |
| | 6 | 38 | 1.29 | A | 76 | A |
| | 7 | 37 | 1.25 | A | 85 | A |
| | 8 | 37 | 1.24 | A | 84 | A |

**[Table 7]**

| | | Dynamic surface tension [mN/m] | Image density | | Determination [µm] | |
|---|---|---|---|---|---|---|
| | | Measured value (10msec) | Measured value | Determination | Measured value | Determination |
| Comparative Example | 5 | 40 | 1.42 | A | 74 | B |
| | 6 | 36 | 1.16 | B | 85 | A |
| Example | 9 | 38 | 1.26 | A | 78 | A |
| | 10 | 37 | 1.25 | A | 83 | A |
| | 11 | 39 | 1.32 | A | 75 | A |
| | 12 | 38 | 1.27 | A | 77 | A |
| Comparative Example | 7 | 36 | 1.16 | B | 87 | A |
| | 8 | 40 | 1.42 | A | 74 | B |
| | 9 | 46 | 1.57 | A | 66 | B |
| | 10 | 33 | 1.13 | B | 86 | A |

As shown in Table 6 and Table 7, all of the inks according to Example 1 to 12 has good image density and good line widths. On the other hand, the inks according to Comparative Example 1 and 3 had poor line widths because the octanol/water partition coefficient (log Kow) of the water-soluble solvent b is less than - 1.0 and hydrophilicity is too high, increasing the dynamic surface tension of the ink and making it difficult for the ink to wet and spread. Further, the inks according to Comparative Examples 2 and 4 had poor image density because the octanol/water partition coefficient (log Kow) of the water-soluble solvent b exceeds 0.4 and hydrophobicity is too high, decreasing the dynamic surface tension of the ink.

Further, the inks according to Comparative Examples 5, 8, and 9 had poor line widths because the hydrophilicity of the surfactant a is too high, increasing the dynamic surface tension of the ink. Specifically, the hydrophilicity is high because the ink according to Comparative Example 5 has a small number of carbon atoms in the hydrocarbon chain (m + n is 11), the ink according to Comparative Example 8 has a large number of carbon atoms in the ethyleneoxide chain (x is 21), and the ink according to Comparative Example 9 has a small number of carbon atoms in the butylene oxide chain (y is 0) .

The inks according to Comparative Examples 6, 7, and 10 had poor image density because the hydrophobicity of the surfactant a is too high decreasing the dynamic surface tension of the ink. Specifically, the hydrophobicity is high because the ink according to Comparative Example 6 has a large number of carbon atoms in the hydrocarbon chain (m + n is 15), the ink according to Comparative Example 7 has a small number of carbon atoms in the ethyleneoxide chain (x is 0), and the ink according to Comparative Example 10 has a large number of carbon atoms in the butylene oxide chain (y is 11).

From the above, the ink according to the present disclosure is capable of achieving favorable image density and line width by adjusting the hydrophobicity of the surfactant a and the water-soluble solvent b within a suitable range to make the dynamic surface tension of the ink within a suitable range. Specifically, by setting the number of carbon atoms in the hydrocarbon chain of the surfactant a (m + n) to 12 or more and 14 or less, the number of carbon atoms of the ethyleneoxide chain (x) to 1 or more and 20 or less, the number of carbon atoms in the butylene oxide chain (y) to 1 or more and 10 or less, and the octanol/water partition coefficient (log Kow) of the water-soluble solvent b to - 1.0 or more and 0.4 or less, the hydrophobicity of the surfactant a and the water-soluble solvent b can be within a suitable range.

## Claims

1. An ink, comprising:
a surfactant represented by the following general formula (1);
a water-soluble solvent having a log Kow of -1.0 or more and 0.4 or less;
a pigment; and
water,
a content of the water-soluble solvent being 30 mass% or more and 50 mass% or less: 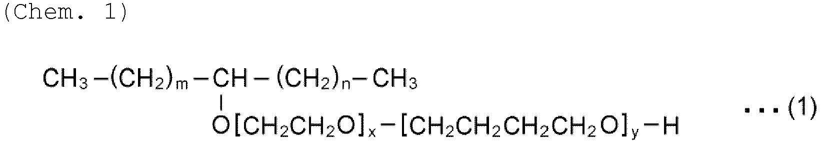
(wherein, in the general formula (1), m and n indicate integers whose sum is 12 or more and 14 or less, x indicates an integer of 1 or more and 20 or less, and y indicates an integer of 1 or more and 10 or less).

2. The ink according to claim 1, which has a value of dynamic surface tension at 10 msec of 37 mN/m or more and 39 mN/m or less.
